**Europäisches Patentamt**

**European Patent Office**

**Office européen des brevets**

(19)

(11) Veröffentlichungsnummer: **0 049 787**
**B1**

(12) **EUROPÄISCHE PATENTSCHRIFT**

(45) Veröffentlichungstag der Patentschrift:
**30.05.84**

(21) Anmeldenummer: **81107558.9**

(22) Anmeldetag: **23.09.81**

(51) Int. Cl.³: **C 08 J  3/14, C 08 J  3/06**

(54) Verfahren zum Herstellen von wässrigen Kunstharzdispersionen.

(30) Priorität: **04.10.80 DE 3037575**

(43) Veröffentlichungstag der Anmeldung:
**21.04.82 Patentblatt 82/16**

(45) Bekanntmachung des Hinweises auf die Patenterteilung:
**30.05.84 Patentblatt 84/22**

(84) Benannte Vertragsstaaten:
**AT BE CH DE FR GB IT LI NL SE**

(56) Entgegenhaltungen:
**DE - A - 2 419 330**
**DE - A - 2 746 782**
**FR - A - 2 223 421**

(73) Patentinhaber: **BASF Farben + Fasern Aktiengesellschaft, Am Neumarkt 30, D-2000 Hamburg 70 (DE)**

(72) Erfinder: **Vock, Friedrich Dr. Dipl.-Ing., Am Klosterwald 35, D-4400 Münster (DE)**
Erfinder: **Lessmeister, Peter, Dr. Dipl.-Chem., Beethovenstrasse 6, D-4400 Münster (DE)**
Erfinder: **Kirchner, Ralf, Ing. grad., Homannstrasse 21, D-4400 Münster (DE)**

(74) Vertreter: **Habbel, Hans-Georg, Dipl.-Ing., Postfach 3429 Am Kanonengraben 11, D-4400 Münster (DE)**

## Beschreibung

Die Erfindung bezieht sich auf ein Verfahren zum Herstellen von wässrigen Kunstharzdispersionen durch Ausfällen der Kunstharze aus ihren gegebenenfalls Pigmente, Füllstoffe und Zusatzstoffe enthaltenden Lösungen in wassermischbaren Lösungsmitteln mit Wasser, anschliessendes Abtrennen der ausgefällten Feststoffe und gleichmässiges Verteilen in wässrigem Medium.

In Kunstharzsystemen für Beschichtungszwecke beeinflusst die Teilchengrössenverteilung der Feststoffanteile das Eigenschaftsbild solcher Systeme in Bezug auf viele Eigenschaften des flüssigen Systems, wie z.B. die Sedimentationsstabilität, die Applizierbarkeit, die Verlaufseigenschaften bei der Filmbildung und die Eigenschaften des applizierten und gehärteten Films, wie z.B. die Farbstärkeentwicklung und die Glanzeigenschaften sehr stark. Deshalb werden für bestimmte Produkte und Anwendungsfälle bestimmte Partikelgrössenverteilungen gefordert, die wie bei Füllern, Grundierungen für den Fahrzeugsektor und für Decklacke im Fahrzeugbereich unter 10 µm liegen sollen. Auch die Partikelgrössen von Kunstharzen in wässrigen Kunstharzdispersionen sollen bei diesen Anwendungsbereichen ebenfalls in der gleichen Grössenordnung liegen wie die Korngrössen der Pigmente. Das wird aber nicht erreicht, wenn man Kunstharzlösungen in organischen Lösungsmitteln mit Gasen, wie überhitztem Wasserdampf, Luft oder Inertgas zerstäubt und trocknet und die angefallenen festen, lösungsmittelfreien Kunstharzteilchen in Wasser zu einer Kunstharzdispersion dispergiert. Die erforderlichen Teilchengrössen und eine gleichmässige Korngrössenverteilung werden ebenfalls nicht erreicht, wenn man eine Kunstharzlösung in organischen Lösungsmitteln in einem Rührwerk in Wasser verteilt und dadurch den Festkörper zur Ausscheidung bringt. Man erreicht ebenfalls keine guten Ergebnisse, wenn man eine Kunstharzlösung in organischen Lösungsmitteln mit Hilfe von Strahldüsen in Wasser einbläst und den Festkörper auf diese Weise zur Ausscheidung bringt.

Aufgabe war es daher, wässrige Kunstharzdispersionen zu schaffen, bei denen die festen Kunstharze Teilchengrössen besitzen, die nach dem Herstellen eines Filmes zu ähnlichen Eigenschaftsbildern führen, wie man sie von den Kunstharzlösungen erhält.

Diese Aufgabe wurde gelöst durch ein Verfahren zum Herstellen von wässrigen Kunstharzdispersionen durch Ausfällen der Kunstharze mit Wasser aus ihren gegebenenfalls Pigmente, Füllstoffe und Zusatzstoffe enthaltenden Lösungen in wassermischbaren Lösungsmitteln, anschliessendes Abtrennen der ausgefällten Feststoffe und gleichmässiges Verteilen in wässrigem Medium, das dadurch gekennzeichnet ist, dass das Ausfällen der Kunstharze in Gegenwart inerter Mahlkörper erfolgt.

Besonders vorteilhaft ist es dabei, dass die Mahlkörper bewegt werden und sich in Bewegung befinden. Auf diese Weise wird ein besonders gleichmässiges Verteilen der ausgefällten Kunstharzpartikel bewirkt.

In einer bevorzugten Ausführungsform des erfindungsgemässen Verfahrens wird die Kunstharzlösung in einen Wasser und Mahlkörper enthaltenden Behälter unter Rühren zugegeben, wobei die Ausfällung des Feststoffes in feinverteilter Form erfolgt und wonach die Ausfällung samt Flüssigkeit von den Mahlkörpern abgetrennt, die Ausfällung in bekannter Weise filtriert oder zentrifugiert und der Filterkuchen bzw. Zentrifugenrückstand in ein wässriges Medium eindispergiert wird.

Andererseits kann man in einer anderen Ausführungsform auch so verfahren, dass zuerst die Kunstharzlösung, die gegebenenfalls Pigmente, Füllstoffe und Zusatzstoffe enthält, in dem die Mahlkörper enthaltenden Behälter hergestellt wird und anschliessend durch Zugabe von Wasser die Ausfällung des Feststoffes erfolgt, wonach die Ausfällung samt Flüssigkeit von den Mahlkörpern abgetrennt und die Ausfällung in bekannter Weise filtriert oder zentrifugiert und der Filterkuchen bzw. Zentrifugenrückstand in ein wässriges Medium eindispergiert wird. Nach dieser Arbeitsweise lässt bzw. lassen sich in dem gleichen, die Mahlkörper enthaltenden Behälter zunächst einmal die Kunstharzlösung herstellen und die Pigmente und Füllstoffe bis zur gewünschten Kornfeinheit einmahlen und anschliessend gleich durch die Zugabe des Wassers das Ausfällen der Feststoffe bewirken.

Eine andere Ausführungsform des erfindungsgemässen Verfahrens sieht eine kontinuierliche Arbeitsweise vor, bei dem eine kontinuierlich arbeitende Rührwerksmühle eingesetzt wird. Durch die Rührwerksmühle wird ein Wasserkreislauf geführt, in den unmittelbar vor dem Eintritt in die Rührwerksmühle die Kunstharzlösung zudosiert wird.

In der Rührwerksmühle wird dann die Ausfällung bewirkt, die Mahlkörper verbleiben in der Rührwerksmühle, während die Ausfällung zusammen mit der Flüssigkeit abgeführt wird.

In einer anderen Ausführungsform ist es ebenfalls möglich, zunächst einmal mittels der kontinuierlich arbeitenden Rührwerksmühle die Pigmente, Füllstoffe und Zusatzstoffe zusammen mit der Kunstharzlösung zu vermahlen und daran anschliessend in einer zweiten Stufe Wasser in den durch die Rührwerksmühle geführten Kreislauf der Kunstharzlösung unmittelbar vor dem Eintritt in die Rührwerksmühle zuzudosieren.

Die Verwendung von Mahlkörpern beim Ausfällen der Kunstharze aus ihren Lösungen in wassermischbaren organischen Lösungsmitteln hat grosse Vorteile. Ein intensives Rühren der Mahlkörper-Wasser-Mischung oder der Mischung aus Mahlkörper und Kunstharzlösung lässt hohe Scherkräfte wirksam werden. Bei der Einmischung der Kunstharzlösung setzt sofort eine Diffusion des Lösungsmittels aus der Kunstharzlösung in die Wasserphase ein. Hierbei bilden sich beim Einmischen der Kunstharzlösungen in Wasser während der Diffusion der organischen Lösungsmittel in die wässrige Phase an der Tröpfchengrenzfläche diffusionshemmende Schichten. Diese diffusionshemmenden Schichten werden durch die Einwirkung der Mahlkörper zerstört und die ausfallenden Kunstharzpartikel werden sehr fein dispers in der umgebenden Wasserphase verteilt und es wird eine grosse Stoffaustauschfläche erzeugt. Das Mengenverhältnis Wasser zu Kunstharzlösung wird bei dem Vorgang so eingestellt, dass bei Erreichen des Diffusionsgleichgewichtes das Kunstharz als Feststoff vorliegt.

Der technische Vorteil des erfindungsgemässen Verfahrens unter Verwendung von Mahlkörpern ist, dass wesentlich feinere Kunstharzpartikel erreicht werden und dass der Ausfällprozess sehr rasch durchgeführt werden kann.

Die geeigneten Mahlkörper sind inert und können aus verschiedenem Material bestehen. So können es z.B. Stahl- oder Glaskugeln sein, ferner Steatitkugeln, Porzellankugeln, Flintsteine oder auch Sand, wie er z.B. als Ottawa-Sand in den Rührwerksmühlen Verwendung findet.

Das erfindungsgemässe Verfahren wird an Hand der Figuren erläutert, ohne es einzuschränken. So zeigt

Fig. 1 eine schematische Darstellung des Verfahrens unter Verwendung eines mit Mahlkörpern gefüllten Behälters,

Fig. 2 eine schematische Darstellung des Verfahrensablaufes unter Verwendung einer Rührwerksmühle im kontinuierlichen Betrieb.

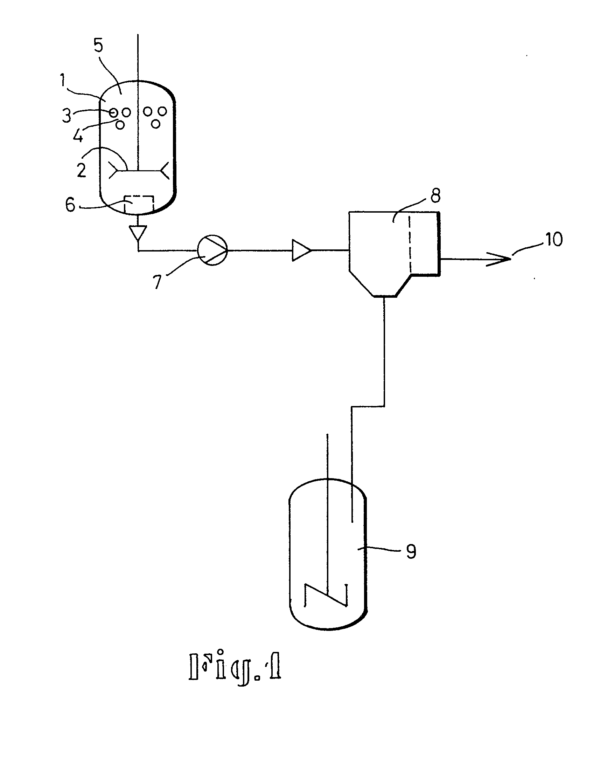

In Fig. 1 wird mit 1 ein Rührbehälter bezeichnet, der mit einem Rührwerk 2 ausgestattet ist und der Mahlkörper 3 enthält. In dem Rührbehälter 1 ist Wasser 4 vorgelegt. Das Rührwerk 2 wird um seine vertikale Achse gedreht, wobei die Mahlkörper 3 und das Wasser 4 in intensive Bewegung gesetzt werden. Unter intensivem Rühren der Mahlkörper-Wasser-Mischung durch das Rührwerk 2 wird eine Kunstharzlösung 5 von oben dem Rührbehälter 1 zugeführt. Ist die gesamte Kunstharzlösung in dem Behälter verteilt, wird noch eine zeitlang weitergerührt. Dann wird über ein Sieb 6, das am Boden des Behälters 1 angebracht ist und das die Mahlkörper 3 im Behälter zurückhält, das flüssige Gemisch abgelassen und mittels einer Pumpe 7 und einem Filter 8 das lösungsmittelhaltige Wasser von den Kunstharzpartikeln abgetrennt. Der im Filter 8 entstandene Filterkuchen kann noch mit weiterem Wasser gewaschen werden. Anschliessend wird der wasserfeuchte Filterkuchen in einem Behälter 9 mit Wasser und gegebenenfalls Dispergierhilfsmitteln und Schutzkolloiden zu einer Kunstharzdispersion dispergiert.

Das Lösungsmittel-Wasser-Gemisch wird über 10 einer Lösungsmittelaufbereitungsanlage zugeführt.

Anstelle des Filters 8 kann auch eine Zentrifuge verwendet werden, wobei dann der Zentrifugenrückstand auf dieselbe Weise wie der Filterkuchen weiter verarbeitet wird.

Mit derselben Verfahrenslage kann auch so gearbeitet werden, dass der Rührbehälter 1 nicht mit Wasser 4 befüllt wird, sondern dass in dem Behälter anstelle des Wassers die Kunstharzlösung und die gegebenenfalls vorhandenen Pigmente und Füllstoffe eingefüllt werden und zunächst eine gegebenenfalls pigmentierte Kunstharzlösung hergestellt wird. An der Stelle 5, an der die Kunstharzlösung in das Wasser eingespeist wurde, wird in diesem Fall das Wasser dem Behälter 1 zugeführt. Das Ausfällen und Weiterverarbeiten des Kunstharz-Lösungsmittel-Wasser-Gemisches erfolgt in derselben eben beschriebenen Weise.

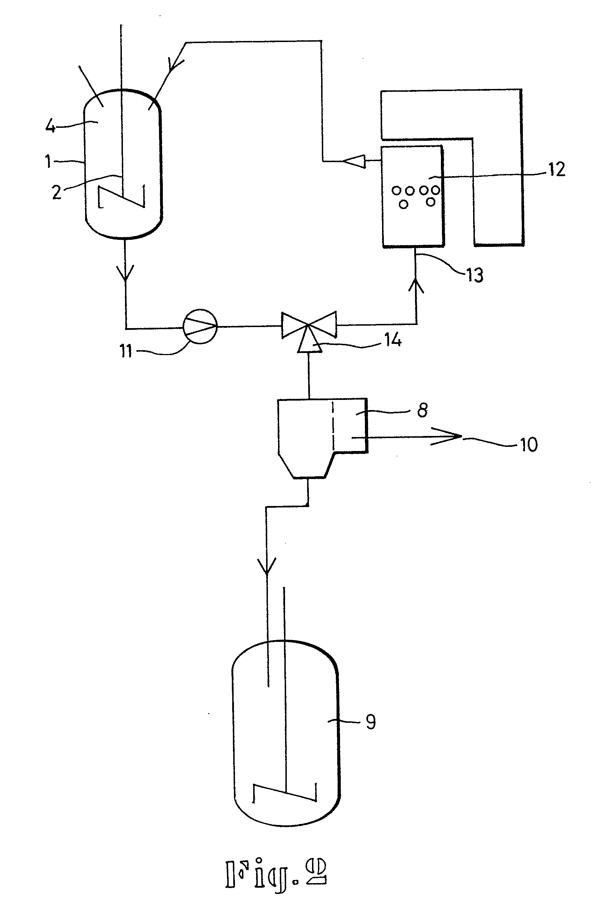

Gemäss dem in Fig. 2 dargestellten Verfahrensschema wird in einem Rührbehälter 1, der mit einem Rührwerk 2 versehen ist, Wasser 4 vorgelegt und mit einer Pumpe 11 durch eine mit Mahlkörpern gefüllte Rührwerksmühle 12 gepumpt und in den Behälter 1 zurückgeführt.

Diesem Kreislauf wird bei 13 eine Kunstharzlösung zudosiert. Nach Abschluss der Dispergierung und dem Ausfällen des Kunstharzes wird die flüssige Mischung aus dem Rührbehälter 1 über ein Drei-Wege-Ventil 14 dem Filter 8 oder der Zentrifuge zugeführt. Der Filterkuchen bzw. der Zentrifugierrückstand wird dann mit Wasser zu einer Kunstharzdispersion dispergiert.

Mit Hilfe derselben Apparatur kann auch zunächst in der Rührwerksmühle die gegebenenfalls pigmentierte Kunstharzlösung hergestellt werden, die sich anstelle des Wassers in dem Kreislauf befindet. Anstelle der Kunstharzlösung wird dann bei 13 Wasser zudosiert.

Die auf diese Weise hergestellten wässrigen Dispersionen enthalten äusserst fein verteilte Kunstharzpartikel von sehr geringer Grösse, die sich nach dem Aufbringen auf eine Unterlage und Härten an ihren technologischen Eigenschaften von solchen Überzügen, die aus einer Kunstharzlösung hergestellt worden sind, nicht mehr unterscheiden.

## Patentansprüche

1. Verfahren zum Herstellen von wässrigen Kunstharzdispersionen durch Ausfällen der Kunstharze mit Wasser aus ihren gegebenenfalls Pigmente, Füllstoffe und Zusatzstoffe enthaltenden Lösungen in wassermischbaren Lösungsmitteln, anschliessendes Abtrennen der ausgefällten Feststoffe und gleichmässiges Verteilen in wässrigem Medium, dadurch gekennzeichnet, dass das Ausfällen der Kunstharze in Gegenwart inerter Mahlkörper erfolgt.

2. Verfahren nach Anspruch 1, dadurch gekennzeichnet, dass die Mahlkörper sich in Bewegung befinden.

3. Verfahren nach den Ansprüchen 1 und 2, dadurch gekennzeichnet, dass die Kunstharzlösung in einen Wasser und Mahlkörper enthaltenden Behälter unter Rühren zugegeben wird, wobei die Ausfällung des Feststoffes in feinverteilter Form erfolgt und wonach die Ausfällung in bekannter Weise filtriert oder zentrifugiert und der Filterkuchen, bzw. Zentrifugenrückstand in ein wässriges Medium eindispergiert wird.

4. Verfahren nach den Ansprüchen 1 und 2, dadurch gekennzeichnet, dass die Kunstharzlösung, die gegebenenfalls Pigmente, Füllstoffe und Zusatzstoffe enthält, in dem die Mahlkörper enthaltenden Behälter hergestellt wird und anschliessend durch Zugabe von Wasser die Ausfällung des Feststoffes erfolgt, wonach die Ausfällung samt Flüssigkeit von den Mahlkörpern abgetrennt und die Ausfällung in bekannter Weise filtriert oder zentrifugiert und der Filterkuchen bzw. Zentrifugenrückstand in ein wässriges Medium eindispergiert wird.

5. Verfahren nach den Ansprüchen 1 bis 3, dadurch gekennzeichnet, dass die Kunstharzlösung in den durch eine mit Mahlkörpern gefüllte kontinuierlich arbeitende Rührwerksmühle geführten Wasserkreislauf unmittelbar vor dem Eintritt in die Rührwerksmühle zudosiert wird.

6. Verfahren nach den Ansprüchen 1 bis 3, dadurch gekennzeichnet, dass die Kunstharzlösung in einer ersten Stufe in der kontinuierlich arbeitenden Rührwerksmühle hergestellt und in einer zweiten Stufe Wasser in den durch die Mahlkörper enthaltende kontinuierlich arbeitende Rührwerksmühle geführten Kreislauf der Kunstharzlösung unmittelbar vor dem Eintritt in die Rührwerksmühle zudosiert wird.

**Revendications**

1. Procédé pour la préparation de dispersion aqueuses de résines synthétiques, par précipitation des résines synthétiques avec de l'eau à partir de leurs solutions, contenant éventuellement des pigments, des charges et des additifs, dans des solvants miscibles à l'eau, puis par séparation des matières solides précipitées et répartition uniforme dans un milieu aqueux, caractérisé en ce que la précipitation des résines synthétiques s'effectue en présence d'éléments de broyage inertes.

2. Procédé selon la revendication 1, caractérisé en ce que les éléments de broyage sont en mouvement.

3. Procédé selon l'une quelconque des revendications 1 ou 2, caractérisé en ce que la solution de résine synthétique est introduite sous agitation dans un récipient contenant de l'eau et des éléments de broyage, ce à l'occasion de quoi s'effectue la précipitation des matières solides sous une forme finement divisée et ce après quoi le précipité est, d'une manière connue, filtré ou centrifugé, le gâteau de filtration ou le résidu de centrifugation étant dispersé dans un milieu aqueux.

4. Procédé selon l'un quelconque des revendications 1 ou 2, caractérisé en ce que la solution de résine synthétique, qui contient éventuellement des pigments, des charges et des additifs, est préparée dans le récipient contenant les éléments de broyage et qu'ensuite a lieu, par addition d'eau, la précipitation des matières solides, ce après quoi le précipité, ensemble avec le liquide, est séparé des éléments de broyage, le précipité étant filtré ou centrifugé d'une manière connue et le gâteau de filtration ou le résidu de centrifugation étant dispersé dans un milieu aqueux.

5. Procédé selon l'une quelconque des revendications 1 à 3, caractérisé en ce que la solution de résine synthétique est introduite, directement avant introduction dans le broyeur avec agitateur, dans le circuit fermé d'eau mis en circulation par un broyeur avec agitateur fonctionnant en continu et rempli d'éléments de broyage.

6. Procédé selon l'une quelconque des revendications 1 à 3, caractérisé en ce que la résine synthétique est, dans une première étape, préparée dans le broyeur avec agitateur fonctionnant en continu et que, dans une deuxième étape, de l'eau est introduite, immédiatement avant introduction dans le broyeur avec agitateur, dans le circuit fermé de la solution de résine synthétique, mis en mouvement par le broyeur avec agitateur fonctionnant en continu et contenant les éléments de broyage.

**Claims**

1. A process for the preparation of aqueous synthetic resin dispersions by using water to precipitate the synthetic resins from their solutions in water-miscible solvents, which solutions may contain pigments, extenders and additives, and then separating off the precipitated solids and dispersing them uniformly in an aqueous medium, characterised in that the precipitation of the synthetic resins is carried out in the presence of inert grinding bodies.

2. A process according to Claim 1, characterised in that the grinding bodies are in motion.

3. A process according to Claims 1 and 2, characterised in that the synthetic resin solution is introduced into a vessel containing water and grinding bodies, whilst stirring, during which the solid precipitates in finely divided form and after which the precipitate is filtered off or centrifuged off in a known manner and the filter cake or centrifugation residue is dipsersed in an aqueous medium.

4. A process according to Claims 1 and 2, characterised in that the synthetic resin solution, which may contain pigments, extenders and additives, is prepared in the vessel containing the grinding bodies, and then the solid is precipitated by adding water, after wich the precipitate together with the liquid are separated off from the grinding bodies, and the precipitate is filtered off or centrifuged off in a known manner and the filter cake or centrifugation residue is dispersed in an aqueous medium.

5. A process accroding to any one of Claims 1 to 3, characterised in that the synthetic resin solution is metered into the water circulating through a continuously operating stirred mill filled with grinding bodies, immediately before entering the stirred mill.

6. A process according to any one of Claims 1 to 3, characterised in that, in a first step, the synthetic resin solution is prepared in the continuously operating stirred mill, and, in a second step, water is metered into the synthetic resin solution circulating through the continuously operating stirred mill containing the grinding bodies, immediately before entering the stirred mill.

Fig. 1

Fig. 2